# DEMANDE DE BREVET EUROPEEN

(11) **EP 1 033 242 A1**
(43) Date de publication de la demande: **06.09.2000**
(21) Numéro de dépôt: 99200573.6
(22) Date de dépôt: 02.03.1999
(51) Int. Cl.: B32B 27/12, B60J 7/10

(54) **Matériau perfectionné pour bâches et procédé de fabrication d'un tel matériau**

(71) Demandeur: Sioen Industries N.V., 8850 Ardooie (BE)
(72) Inventeur: Sioen, Jacques, 8300 Knokke (BE)
(74) Mandataire: Leherte, Georges M.L.M., Dr.

(57) **Abrégé**

L'invention concerne un matériau composite en forme de nappes souples comprenant un support de structure entouré, sur les deux faces, d'une matière polymère et/ou plastique formant pélicule, et une couche de feutre adhérant à la matière polymère et/ou plastique sur l'une des faces du matériau composite.

L'invention concerne également un procédé de fabrication d'un tel matériau selon lequel une pâte de matière polymère et/ou plastique formant pélicule est appliquée en couche mince sur chacune des faces du support, ensuite une couche de feutre est appliquée sur l'une des couches de matière polymère et/ou plastique tandis que celle-ci est encore à l'état pâteux, et ensuite l'ensemble est soumis à un traitement provoquant la solidification et/ou gélification de la matière polymère et/ou plastique.

## Description

L'invention se rapporte à un nouveau matériau composite en forme de nappes souples, notamment destiné à la réalisation de bâches de protection, en particulier de bâches du type "toile PVC". L'invention se rapporte, en outre, au procédé de fabrication de ce nouveau matériau souple composite.

Les bâches et tentes de type "toile PVC", c'est-à-dire des supports (toiles textiles ou étoffes de non-tissé) enduits de polychlorure de vinyle ("PVC" ou "polyvinylchloride"), de polyuréthane, de polyethylène ou d'autres matières polymères et/ou plastiques pouvant être appliquées sur de tels supports, sont bien connues en soi. Elles trouvent de nombreuses applications dans le domaine de l'entreposage et de la protection contre les intempéries.

De telles bâches et tentes peuvent être fabriquées par des techniques de transfert ou par des techniques d'enduction à la racle ("knive coating"), généralement connues par les gens de métier.

Il a été constaté que pour certaines applications, de telles bâches présentent l'inconvénient de provoquer la condensation de l'humidité à l'intérieur de la bâche. Cette condensation peut ensuite retomber sous forme de gouttelettes sur les objets entreposés sous la bâche et ainsi détériorer ces objets.

La présente invention a pour objectif de fournir un perfectionnement aux matériaux utilisés pour la réalisation de bâches, de manière à éviter ces inconvénients.

Pour ce faire, l'invention fournit un matériau composite en forme de nappes souples, comprenant un support de structure (toile textile ou etoffe de non-tissé) entouré ou enduit, sur les deux faces, d'une matière polymère et/ou plastique formant pélicule (tel que le polychlorure de vinyle, le polyuréthane, le polyethylène , etc.), et une couche de feutre adhérant à la matière polymère et/ou plastique sur l'une des faces du matériau composite.

Selon une caractéristique supplémentaire de l'invention, la couche de feutre du matériau composite est, de préférence, constituée essentiellement de matériau à propriétés hydrophiles.
Des feutres particulièrement adéquats sont par exemple ceux constitués de fibres de polyester liées chimiquement (feutres liés par un "binder"), parmi lesquels, à titre non limitatif, le produit commercialisé par la société LANTOR sous les références S25018, offrant une absorption d'eau supérieure à 600 g/m².
Le support de structure du matériau composite selon l'invention est quant à lui, de préférence, essentiellement constituée d'une toile tissée ou d'une étoffe non-tissée, en matière synthétique, telle que le polyester, le nylon, l'aramide, etc., ou en matières naturelles, telles que le viscose, le coton, etc., ou en fibres de verre, etc.; plus particulièrement, et de manière non limitative, une toile de polyester de grande tenacité (high tenacity polyester) constitue une toile de support particulièrement appropriée.

La demande de brevet français 2 305 301 décrit un matériau composite, constitué d'un non-tissé de polyester ("BIDIM"), enduit de PVC sur une face, par un procédé de transfert. Le non-tissé peut éventuellement être renforcé d'une grille de polyester. Une telle bâche possède des propriétés isolantes pouvant éventuellement, et dans une certaine limite, resulter en un effet d'anti-condensation.

Cette bâche selon l'art antérieur se distigue des matériaux composites selon l'invention par un effet d'anti-condensation nettement moindre, et par un procédé de fabrication plus complexe pour des bâches de bonne solidité.

Les matériaux composites selon l'invention peuvent, par exemple, servir de bâches de protection dans l'industrie du bâtiment, les transports routier et ferroviaire, l'architecture textile (abris divers, locaux industriels en halles, serres, camping, etc.).

Une application intéressante des matériaux composites selon l'invention se situe dans le domaine des moyens mobiles d'entreposage, comme bâches pour camions et remorques de transport routier et pour wagons de chemins de fer.
Les matériaux composites selon l'invention sont particulièrement utiles dans les situations où il existe des écarts de températures importants et/ou des variations importantes de températures. La nappe composite est utilisée comme séparation de l'espace d'entreposage (mobile) par rapport à l'air libre. La face de PVC est disposée à l'extérieur et procure l'imperméabilité.
Suite aux variations de température, il peut se produire une condensation de l'humidité à l'intérieur de l'espace d'entreposage. Contrairement à ce qui se passe avec une "toile de PVC" classique (où la condensation accumulée à la surface intérieure de la bâche peut provoquer un égouttement néfaste sur le chargement), l'eau de condensation sera absorbée par le feutre hydrophile se trouvant sur la face intérieure de la bâche. Il ne se forme donc pas de gouttes et l'eau condensée est retenue par le feutre jusqu'à ce qu'elle s'évapore à nouveau suite aux conditions ambiantes. Il est également à souligner que le matériau composite n'a guère de fonction thermo-isolante, et ne prévient ou n'empèche pas la condensation, elle l'absorbe.

L'invention procure, d'autre part, un procédé particulier pour la fabrication d'un matériau composite tel que décrit ci-dessus, comportant les étapes suivantes :
- application (par un procédé dit "d'enduction") d'une pâte de matière polymère et/ou plastique formant pélicule, en couche mince sur chacune des faces de la toile, soit simultanément, soit d'abord sur l'une face et ensuite sur l'autre,
- application d'une couche de feutre sur l'une des couches de matière polymère et/ou plastique tandisque celle-ci est encore à l'état pâteuse, et
- solidification de la matière polymère et/ou plastique par un traitement adéquat.
Un tel procédé peut être rélisé de manière continue ou discontinue.
L'application du feutre sur la couche de matière polymère et/ou plastique encore à l'état plastique ou pâteux (sous forme de pâte "mouillée", fraîchement appliquée par enduction directe) constitue une caractéristique importante de l'invention.
Le feutre peut ainsi être appliqué sans grande difficulté et peut parfaitement adhérer à la couche de matière polymère et/ou plastique sans qu'il soit nécessaire de faire pénétrer la matière polymère et/ou plastique dans le feutre. Le fait que la pâte ne pénètre sensiblement pas dans le feutre est d'ailleurs aussi une caractéristique importante de l'invention.

La pâte est, de préférence, appliquée en couches ayant une épaisseur comprise entre 100 g/m² et 2000 g/m², plus particulièrement entre 200 g/m² et 500 g/m².

Selon l'invention, la pâte de matière polymère et/ou plastique, notamment une pâte de PVC, utilisée pour la face sur laquelle sera appliquée la couche de feutre est de préférence additionnée d'un additif renforçant le pouvoir adhésif ("Haftvermittler") de cette pâte.

Selon l'invention, la solidification de la pâte de matière polymère et/ou plastique peut être réalisée par n'importe quelle méthode connue en soi, tel que par une gélification suite à un traitement thermique, un séchage, une polyméristion catalysée, l'action d'un rayonnement, etc., par refroidissement de matière fondue, etc.
Pour des matières se solidifiant par gélification et/ou polymérisation, comme par exemple les pâtes de PVC, un traitement thermique est en général préféré, comme par exemple un chauffage à une température supérieure à 100°C, de préférence à une température comprise entre 120 et 200°C., en particulier à une température d'environ 180°C.

Les couches de pâte de matière polymère et/ou plastique sont, de préférence, appliquées par un procédé dit d'enduction, par application à la racle ("knive coating", soit en "direct coating", soit en "transfer coating") ou par calandrage.

D'autres aspects et caractéristiques de l'invention apparaîtront de la description suivante de quelques exemples particuliers.
Il est à noter toutefois que l'invention n'est aucunement limitée par les détails de ces exemples donnés uniquement à titre illustratif, et que de nombreuses adaptations apparaîtont à l'homme de métier sans sortir du cadre de l'invention, telle que décrite ci-dessus et telle que définie aux revendications qui suivent.

### Exemple 1

### Fabrication d'une bâche pour wagons de chemin de fer destinés au transport de rouleaux de tôles sortant d'un laminoir.

Un matériau composite est produit en enduisant, par calandrage, une toile de polyester (toile de fibres "high tenacity" de calibre 280 à 2200 dtex) sur les deux faces au moyen d'une pâte de PVC.
L'équipement utilisé est une machine d'enduction à la racle commercialisée par la société Mohr.
La pâte de PVC est une dispersion liquide produite par la société EMB.
La pâte est enduite en une épaisseur de 285g/m² sur la face supérieure (face "extérieure" de la bâche) et de 235g/m² sur la face inférieure (face sur laquelle est appliquée la couche de feutre), soit une application totale de pâte de PVC de 520 mg/m².
La fraction de pâte de PVC utilisée pour la face sur laquelle on applique la couche de feutre est additionnée de 3 % en poids de "Haftvermittler" de la société BAYER. Dès que le support est enduit sur les deux faces de manière à former un sandwich PVC / toile / PVC la couche de feutre est appliquée avec une très légère pression sur la couche avec le "Haftvermittler", en évitant que la pâte liquide de PVC ne pénètre dans le feutre.
Le sandwich PVC / toile / PVC / feutre est ensuite "cuit" à une température de 100 à 250°C (environ 180°C) de manière à "gélifier" les couches de PVC.
On obtient un matériau composite de grande solidité, dans lequel la couche de feutre adhère parfaitement à la nappe de PVC.
Le matériau est utilisé pour réaliser des bâches pour des wagons de chemin de fer destinés au transport de rouleaux de tôles ("coils").
Par les variations atmosphériques du cycle jour-nuit, il se produit une condesation de l'humidité ambiante à l'intérieur des wagons.
On a comparé l'état de rouleaux entreposés dans des wagons couverts de bâches en "toile PVC" classiques et celui de rouleaux entreposés dans des wagons couverts de bâches en matériau composite selon l'invention. Dans des conditions strictement identiques pour le reste, on a pu constater en fin de cycle (plusieurs jours et plusieurs nuits), que plusieurs rouleaux entreposés sous les bâches classiques présentaient des taches de rouille dues à des gouttes d'eau de condensation tombées sur les tôles, tandis que les rouleaux entreposés sous les bâches obtenues selon cet exemple étaient intactes.

### Exemple 2

### Bâche pour camions destinés au transport de rouleaux de papier.

Le matériau décrit à l'exemple 1 est utilisé pour réaliser des bâches pour camions destinés au transport de rouleaux de papier.
On a comparé l'état de rouleaux de papier entreposés dans des camions couverts de bâches en "toile PVC" classiques et celui de rouleaux entreposés dans des camions couverts de bâches en matériau composite selon l'invention. Dans des conditions strictement identiques pour le reste, on a pu constater en fin de cycle (quelques jours et nuits), que les roulaux entreposés sous les bâches selon l'invention ne présentaient pas de défauts provoqués par l'humidité, tandis que plusieurs rouleaux entreposés sous des baches en "toile PVC" classiques présentaient des défauts.

## Revendications

1. Matériau composite en forme de nappes souples comprenant un support muni d'une couche plastique, **caractérisé en ce que** le matériau composite comprend un support de structure enduit sur les deux faces d'une matière polymère et/ou plastique formant pélicule, et une couche de feutre adhérant à la matière polymère et/ou plastique sur l'une des faces du matériau composite.

2. Matériau composite selon la revendication 1, **caractérisé en ce que** la couche de feutre est essentiellement constituée de matériau à propriétés hydrophiles.

3. Matériau composite selon l'une ou l'autre des revendications 1 et 2, **caractérisé en ce que** le support de structure est essentiellement constitué d'une toile tissée ou d'une étoffe non-tissée en matière synthétique ou naturelle.

4. Matériau composite selon l'une ou l'autre des revendications précédentes, **caractérisé en ce que** la matière polymère et/ou plastique formant pélicule est choisie parmi le polychlorure de vinyle, le polyuréthane et le polyethylène.

5. Matériau composite selon l'une ou l'autre des revendication précédentes, destiné à une utilisation en architecture textile ou comme bâches pour moyens mobiles d'entreposage.

6. Procédé de fabrication d'un matériau composite en forme de nappes souples par application d'une couche plastique sur un support de structure, **caractérisé en ce que** :
une matière polymère et/ou plastique formant pélicule est appliquée en couche mince (enduction) sur chacune des faces d'un support de structure, qu'ensuite une couche de feutre est appliquée sur l'une des couches de matière polymère et/ou plastique tandis que celle-ci est encore à l'état pâteux, et qu'ensuite l'ensemble est soumis à un traitement provoquant la solidification et/ou gélification de la matière polymère et/ou plastique.

7. Procédé selon la revendication 6, **caractérisé en ce que** la pâte de matière polymère et/ou plastique utilisée pour la face sur laquelle est appliquée la couche de feutre est additionnée d'un additif renforçant le pouvoir adhésif de cette pâte.

8. Procédé selon l'une ou l'autre des revendications 6 et 7, **caractérisé en ce que** la solidification / gélification de la matière polymère et/ou plastique est réalisée par un traitement thermique.
